# EUROPEAN PATENT APPLICATION

(11) **EP 3 040 901 A1**
(43) Date of publication of application: **06.07.2016**
(21) Application number: 14307196.7
(22) Date of filing: 29.12.2014
(51) Int. Cl.: G06F 21/72, G06F 21/77, H04L 9/00

(54) **System and method for aligning time-series data over a large range of time indices**

(71) Applicant: GEMALTO SA, 92190 Meudon (FR)
(72) Inventor: Perion, Fabrice, 92190 MEUDON (FR); Leveque, Sylvian, 92190 MEUDON (FR)
(74) Representative: Cassagne, Philippe M.J.

(57) **Abstract**

A technology for verifying secure electronic devices are not vulnerable to side-channel attacks by performing such an attack by segmenting a plurality of time-indexed data series into neighborhood segments around points of interest, performing static alignment on the time-indexed data series in each neighborhood, splicing the aligned neighborhood segments, analyzing the aligned data in an attempt to discern secret information, and verifying whether the secure electronic device is vulnerable to the attack by determining whether the analysis results have revealed the secret information. Other systems and methods are disclosed.

## Description

### BACKGROUND OF THE INVENTION

The present invention relates generally to protecting electronic devices against attacks designed to discern secret information stored on the electronic devices, and in particular, to demonstrating that a secure electronic device is or is not vulnerable to side-channel attacks in which a plurality of time series curves are aligned in multiple segments of the time-index range.

Electronic communication and commerce are powerful yet dangerous tools. With the widespread availability of network technology, such as the Internet, there is an ever increasing use of online tools for communication and commerce. Each year more users find it easier or quicker to conduct important transactions, whether in the form of correspondence or commerce, using computers and other computerized devices over computer networks. However, there is always the risk that the security of electronic transactions can be compromised through interception by third parties who do not have the right to partake in the transactions. When malicious third parties obtain access to otherwise private transactions and data there is risk of economic loss, privacy loss, and even loss of physical safety. Cryptography is one mechanism employed to avoid intrusion into the privacy of electronic transactions and data.

As smart cards and related secure electronic devices (hereinafter, collectively, secure electronic devices) contain sensitive private data, such as cryptographic keys, and are deployed outside of the control of the issuer, the secure electronic devices must be protected against attacks that are designed to obtain access to that sensitive private data. One category of attack is the so-called *side-channel attack.* In a side-channel attack some time-series data of an externally measureable physical characteristic that varies over a course of an operation is collected. The measured physical characteristic may be, for example, the power consumed by the processor, an electromagnetic radiation emitted by the device, or sound emitted by the device. By repeating the underlying operation of the secure device over thousands or millions of iterations and on each iteration collecting time series of the measured physical characteristic, and studying the evolution of the time-series data over the set of time series, it may be possible for an attacker to discern something sensitive about the operation performed, e.g., the cryptographic key used to perform a cryptography operation. To be exploitable, these time series must be temporally synchronized.

A countermeasure against side-channel attacks involves de-synchronizing operations so that any physical property leaked outside of the secure electronic device 101, e.g., power consumption or electromagnetic radiation, produces unsynchronized time indexed data series. To perform a side-channel attack on such unsynchronized operations requires synchronization of the time indexed data series. Thus, to strengthen the countermeasure, secure electronic devices employ techniques, at the hardware or software level, to make such synchronization of the time indexed data series difficult, if not impossible.

One alignment technique is the so-called *static alignment.* Stefan Mangard, et al., "Power Analysis Attacks: Revealing the Secrets of Smart Cards", Springer, 2007.

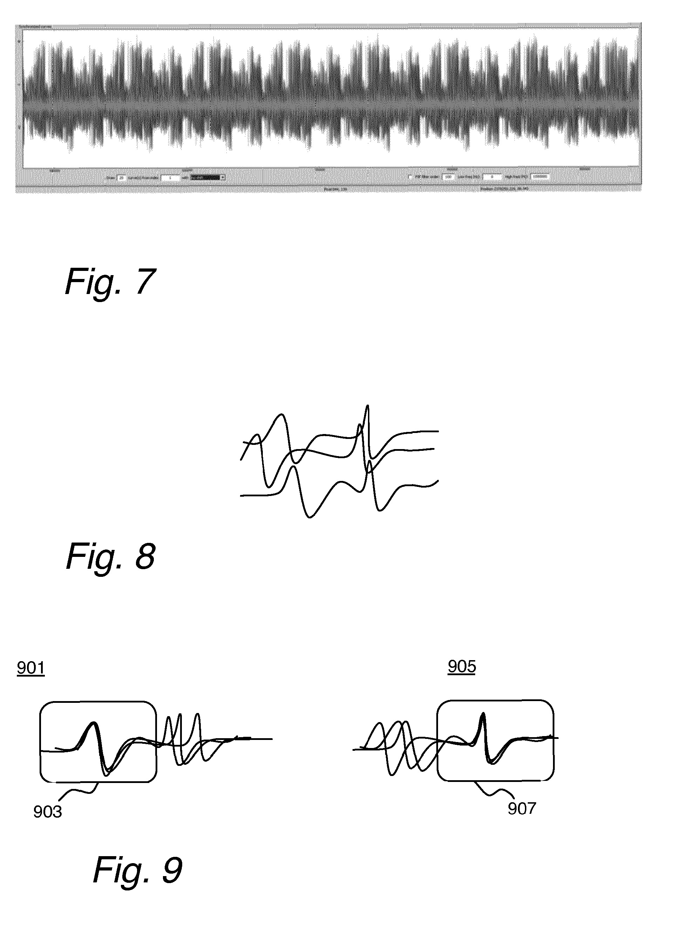

Figures 8 and 9 herein illustrate static alignment as described in the cited work. Essentially, a time span of timing inaccuracies is determined between a reference curve and each other curve. The other curves are then time-shifted by that time span. Of course, as seen in Figure 9, if the timing inaccuracies are not constant throughout the range of the time index, the alignment will not be accurate for the entire curve.

Static alignment may be used for side-channel attacks by repeatedly performing the static alignment over the points of the time series data. Given *P* positions in the time series that need to be aligned, *P* static alignments are performed at each of the positions. If there is an interesting section on *n* curves (e.g., *n*=50,000) and the curves are composed of indexes X₁, X₂, ... X_{P}:
- perform a static alignment of the *n* curves
- process the aligned data as X

This solution requires the alignment and processing of the aligned data *P* times.

Another alignment technique is the so-called *elastic alignment.* Jasper G. J. Woudenberg, et al., Improving Differential Power Analysis by Elastic Alignment, Proceedings of the 11th International Conference on Topics in Cryptology: CT-RSA 2011, pp 104-119, Springer-Verlag Berlin, Heidelberg, 2011. In elastic alignment the warping distance, referred to as Dynamic Time Warp, is determined throughout the index range and used to provide aligned curves.

Time-series data curves may also be aligned using the *rapid alignment method* described in RAM: Rapid Alignment Method, Smart Card Research and Advanced Applications: 10th IFIP WG 8.8/11.2 International Conference, CARDIS 2011, Leuven, Belgium, September 14-16, 2011, Revised Selected Papers, pp 266-282, 2011. The RAM algorithm detects points of interest, generates feature vectors for the detected points, matches points between traces, and warps the data set to align the points by interpolating between points as necessary. Unfortunately, elastic alignment and RAM are not useable for all curve shapes.

From the foregoing it will be apparent that attackers will continue to develop new methods for aligning time series data and that there is a need for an improved technology to demonstrate whether secure electronic device are able to withstand such attacks.

### BRIEF DESCRIPTION OF THE DRAWINGS

Figure 1 is a schematic illustration of a secure electronic device, e.g., a smart card, connected via a reader to a computer.
Figure 2 is a schematic illustration of a high-level architecture of the secure electronic device of Figure 1.
Figure 3 is a schematic drawing illustrating programs and data that may be stored in the NVM and/or ROM of the secure electronic device of Figures 1 and 2.
Figure 4 is an illustration of an example of a high-level architecture of a computer of Figure 1 and that may be used to analyze time series data acquired from the secure electronic device of Figures 1, 2, and 3 in an attempt to discern protected secret information, e.g., cryptographic keys, stored thereon.
Figure 5 is a schematic drawing illustrating programs and data that may be stored in secondary storage of the computer of Figures 1 and 4.
Figure 6 is a high-level flow diagram illustrating the major steps performed in analyzing time series data obtained through a sensor used to collect side-channel data emitted by the secure electronic device.
Figure 7 is an example illustration of a set of time-indexed data series, specifically, twenty time-indexed electromagnetic curves obtained during CPU operations of a secure electronic device.
Figure 8 is a high-resolution illustration of three misaligned curves.
Figure 9 is a high-resolution illustration illustrating the result of performing prior art static alignment on the three curves from the example of Figure 8.
Figure 10 illustrates such an alignment for the curves presented in Figure 8.
Figure 11 is a flow-chart describing the steps of providing a multi-segment alignment of a plurality of time-indexed data series.
Figure 12 is a graphical representation of the twenty time series curves of Figure 7 after the application of the initial static alignment of the entire time series curves based on an initial point of interest (POI).
Figures 13 and 14 illustrate selected data points as points of interest in a reference time series and in a non-reference time series that is to be aligned to the reference time series. Figure 14 is a portion of the graph of Figure 13 at a higher resolution.
Figure 15 is a graphical illustration of neighborhoods defined around points of interest in the time series data.
Figure 16 is an illustration with the graph of Figure 7 with neighborhoods defined around points of interest.
Figure 17 is a real-world example showing the time series data set of Figure 7 aligned with the multi-static alignment mechanism described herein.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment of the invention, a technology is provided that protects electronic devices, such as smart cards, and other secure electronic computerized devices, from side-channel attacks by providing a time-series data alignment tool and verifying that the devices are secure from attack based on such time-series alignment.

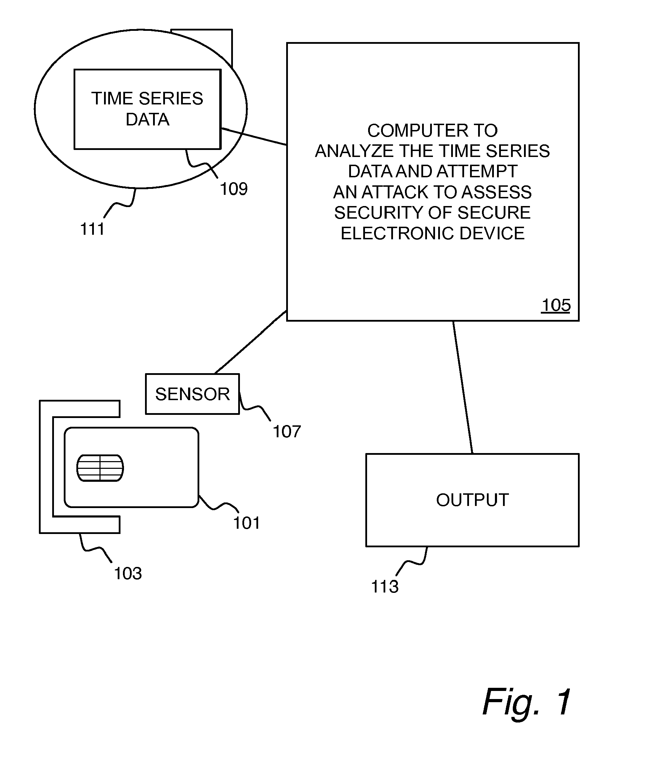

Figure 1 is a schematic illustration of a secure electronic device 101, e.g., a smart card, connected via a reader 103 to a computer (not shown or, alternatively, the computer 105). The secure electronic device 101 may be employed to perform certain secure operations, e.g., cryptography that relies on the use of secret or otherwise private information, e.g., cryptographic keys.

As discussed hereinabove, an attacker seeking to obtain access to the secret information of the smart card may detect certain side-channel data via a sensor 107. The sensor 107 may, for example, be an electromagnetic sensor that monitors bus activity on the secure electronic device 101. Alternatively, the sensor 107 may be connected to power connections of the secure electronic device 101 so as to monitor power consumption by the secure electronic device 101. The sensor 107 may, for example, be an ICR near-field microprobe such as those provided by Langer EMV-Technik of Bannewitz, Germany. Such ICR microprobes are capable of measuring electromagnetic and electric near fields on the chip surface of an IC with a high resolution and sensitivity.

Regardless of the type of side-channel data captured by the sensor 107 for side-channel attacks, the sensor data is time series data 109 which may be stored on storage medium 111.

In order to demonstrate whether a secure electronic device 101 is vulnerable to side-channel attack - based on the gathering of the time-series data 109 via the sensor 107 - a computer 105 may be used to attempt to analyze the time-series data 109 to discern the secret or private information contained within the secure electronic device 101.

The computer 105 may produce an output 113 indicative of whether the secure electronic device 101 is vulnerable to the performed side-channel attack.

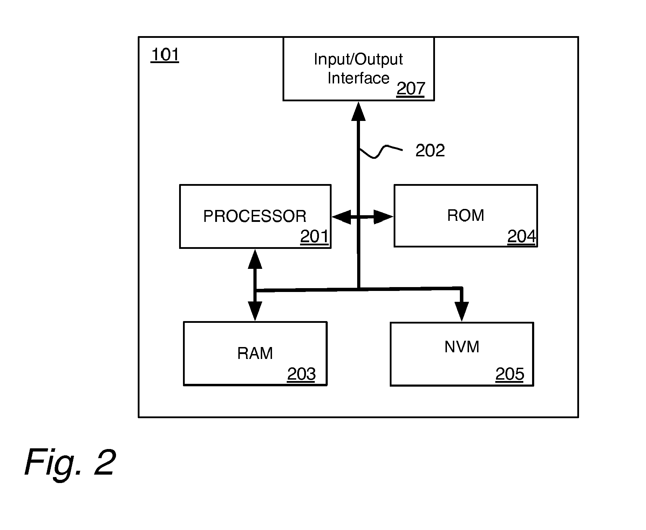

Figure 2 is a schematic illustration of a high-level architecture of the secure electronic device 101 of Figure 1.

The secure electronic device 101 may include a processor 201 connected via a bus 202 to a random access memory (RAM) 203, a read-only memory (ROM) 204, and a non-volatile memory (NVM) 205. The secure electronic device 101 further includes an input/output interface 207 for connecting the processor 201, again typically via the bus 202, by which the secure electronic device 101 may be connected to a host computer or other peripheral device via a reader 103.

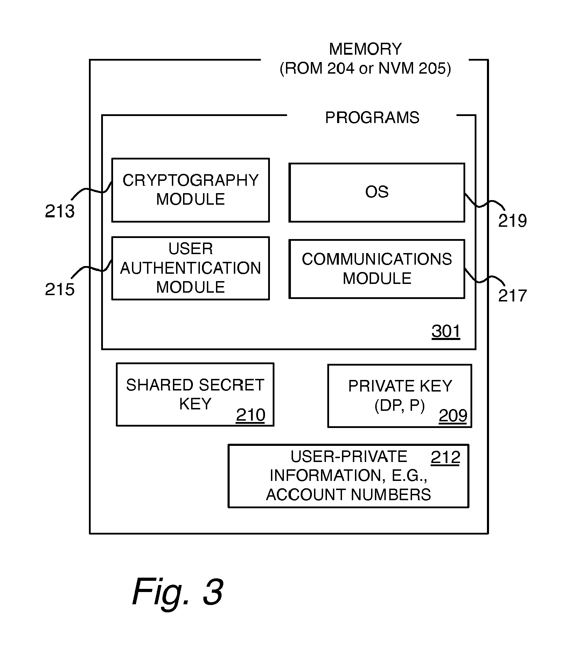

The NVM 205 and/or ROM 204 may include computer programs 301 as is illustrated in Figure 3, which is a schematic drawing illustrating programs and data that may be stored in the NVM and/or ROM of the secure electronic device 101 of Figures 1 and 2. While it is here depicted that the computer programs 301 are all co-located in the ROM 204 or the NVM 205, in actual practice there is no such restriction as programs may be spread out over multiple memories and even temporarily installed in RAM 203. Furthermore, the mobile device 103 may include multiple ROMs or NVMs. The programs 301 include operating system programs as well as application programs loaded on to the mobile device 103. The NVM 205 or ROM 204 may also contain private data, such as a private key 209 or a shared secret key 210, stored either in its basic form or in derived quantities, as well as other user-private information 212 such as account numbers.

The mobile device 103 programs 301 may include a cryptography module 213, a user authentication module 215, a communications module 217, and the operating system OS 219.

In the course of performing operations, any of the programs 301 that perform operations using sensitive data, such as cryptographic keys 209 or 210, may produce physical characteristics that may be observed from outside of the secure electronic device 101. These physical characteristics may be in the form of power consumption or electromagnetic leakage, for example. The objective of an attacker is to discern the sensitive data by repeatedly performing operations on the secure electronic device 101 while observing the physical characteristics in the form of time series data.

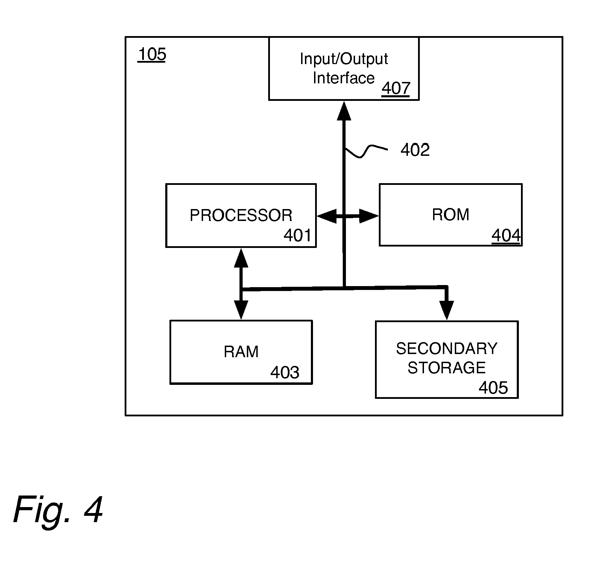

Figure 4 is an illustration of an example of a high-level architecture of a computer 105 that may be used to analyze the time series data 109 in an attempt to discern the protected secret information, e.g., cryptographic keys. Alternatively, the computer 105 may be used to demonstrate whether a particular secure electronic device 101 is vulnerable to an attack using the time series data 109.

The computer 105 may include a processor 401 connected via a bus 402 to a random access memory (RAM) 403, a read-only memory (ROM) 404, and a secondary storage device 405. The computer 105 further includes an input/output interface 407 for connecting the processor 401, typically via the bus 402, to other computers via network and/or to peripheral devices.

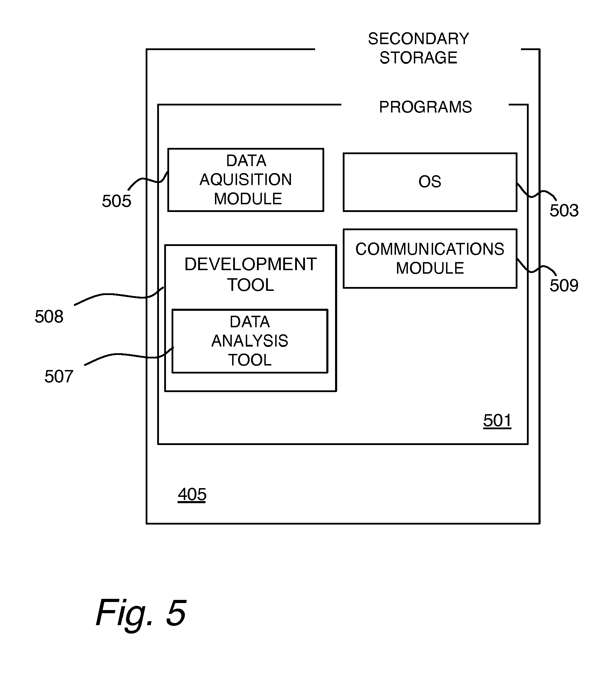

The secondary storage device 405 may include computer programs 501 as is illustrated in Figure 5 and which provide instructions for controlling the operations of the processor 401. While it is here depicted that the computer programs 501 are all co-located in one secondary storage unit 405, in actual practice there is no such restriction as programs may be spread out over multiple secondary storage devices and alternatives thereto such as firmware and non-volatile memories. The programs 501 include operating system programs 503 as well as application programs loaded on to the computer 105.

The computer 105 programs 501 may include a data acquisition module 505 and a data analysis tool 507. The data analysis tool 507 may be included in a development tool 508. The data acquisition module 505 receives data representative of external physical manifestations of the operations of the secure electronic device 101 via the sensor 107 and stores the acquired data in time indexed data series 109.

The data analysis tool 507 may provide a user with tools to interpret the time series data 109 in order to attempt to extract the sensitive information stored on secure electronic device 101 or to demonstrate whether the secure electronic device 101 is vulnerable to side-channel attacks.

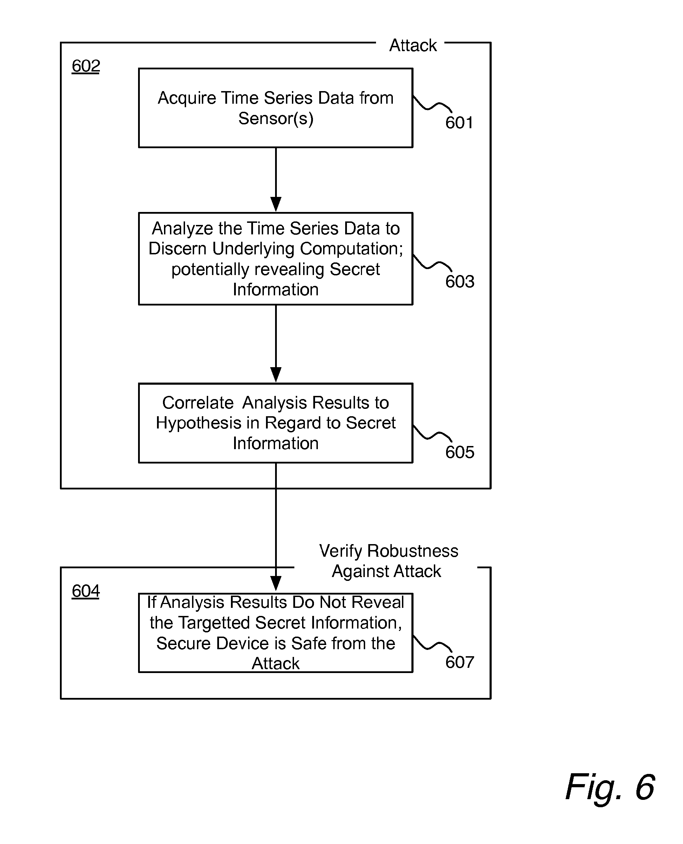

Figure 6 is a high-level flow diagram illustrating the major steps performed (for example, by the computer 105 according to instructions of the data acquisition module 505 and the development tool 508) to analyze time series data 109 obtained through the sensor 107. Figure 6 illustrates the analysis in the context of a verification process which verifies whether a secure electronic device 101 can withstand a side-channel attack. Such a process may be viewed as consisting of two parts: performing the side-channel attack 602, and verifying 604 the obtained data against some data that is known to be the targeted data.

To perform the side-channel attack 602: A first step could be to acquire, for example, using instructions of the data acquisition module 505, the time indexed data during the course of many repeated operations of the secure electronic device 101, step 601. For example, to provide sufficient data to perform a side-channel attack, as many as 1 million repetitions of an operation may be performed where each repetition provides a time-indexed data series. The attack may be performed by correlating the results of these time-indexed data series against a secret data hypothesis.

Next the side-channel attack is continued by performing (for example, by operating the computer 105 according to instructions of the data analysis tool 507 of the development tool 508) an analysis of the time-series data 109, step 603. The actual calculations performed are outside the scope of this document. However, one type of attack, *Differential Power Attack (DPA),* is described in Paul Kocher, et al., "Differential Power Analysis," Lecture Notes in Computer Science, Vol. 1666, pp. 388 - 397, 1999, incorporated herein by reference.

In an attack, the output from the side-channel attack is simply the secret information of the secure electronic device 101 that is targeted by the attack, which is obtained by performing a correlation between the analysis results against a hypothesis in regard to the secret information contained in the secure electronic device 101, step 605. However, in the case of a development tool to demonstrate whether a secure electronic device 101 is safe from the proposed attack, step 604, the output from the development tool is the result of a comparison of the result from the analysis of the time series data, i.e., from the attack 602, and some information known to be the targeted information, step 607, i.e., whether the attack was able to reveal the targeted information.

Thus, if the analysis results have not revealed the targeted information, the development tool 508 may report that the secure electronic device 101 successfully defended against the attack, step 607.

As noted above, a frequently used countermeasure against side-channel attacks is to desynchronize calculations in such a manner that the time-indexed data series collected by sensors are misaligned. Figure 7 is an example illustration of a set of time-indexed data series, specifically, twenty time-indexed electromagnetic curves obtained during CPU operations of a secure electronic device 101. The curves are misaligned and therefore would be difficult for an attacker to analyze.

Figure 8 is a high-resolution illustration of three misaligned curves.

Figure 9 is a high-resolution illustration illustrating the result of performing prior art static alignment on the three curves from the example of Figure 8. In the illustration 901, the three curves have valid alignment on the left portion 903 of the curves. However, additional misalignment of the time index causes the right-hand portion of the curves to be unaligned, thereby not providing a good foundation for side-channel analysis. Similarly, the illustration 905 illustrates static analysis of the three curves beginning with time indexes on the right-hand portion of the curves. In this case, the right-hand portion 907 presents a valid alignment, whereas the left-hand portion remains unaligned.

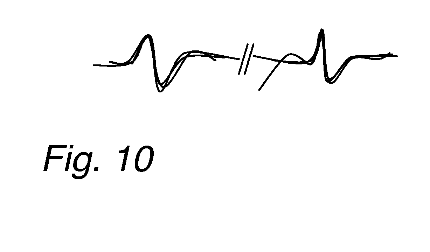

The present technology provides for a mechanism by which both the left-hand and right-hand portions, as well as, for longer time series data, portions throughout the time-index range of the curves, can be brought into valid alignment for curve segments around many, if not all, points of interest. Figure 10 illustrates such an alignment for the curves presented in Figure 8. Both the segment 903 and the segment 907 have good valid alignment.

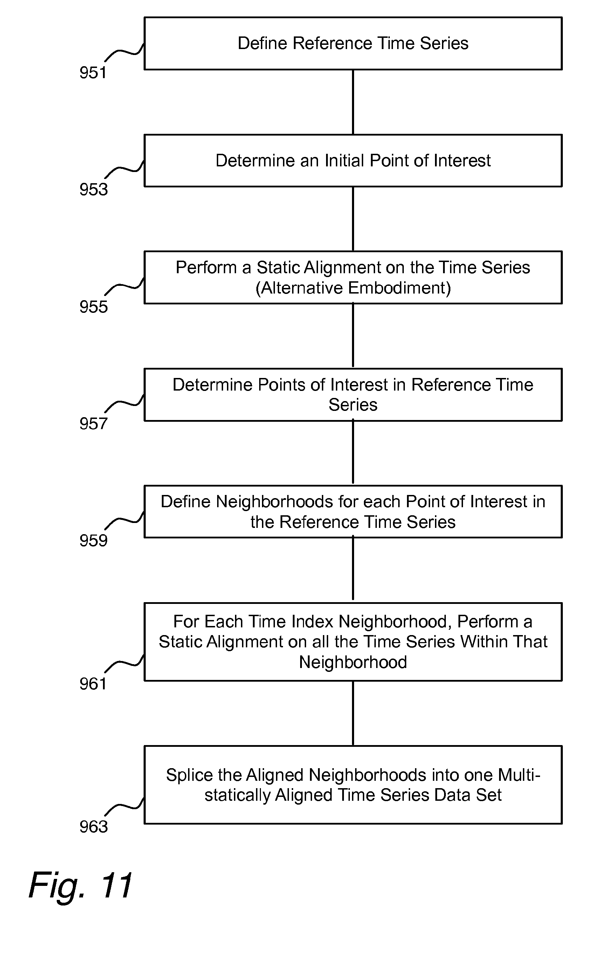

Figure 11 is a flow-chart describing the steps of providing a multi-segment alignment of a plurality of time-indexed data series. First, one of the curves is designated as a reference time series, step 951. In the reference time series an initial point of interest (POI) is defined, step 953. The development tool 508 may provide a mechanism for a user to manually select an initial POI and to receive that indication from the user. The initial POI may, alternatively, be determined using some predetermined threshold, e.g., select as the initial POI the first data point in the reference time series that exceeds the threshold.

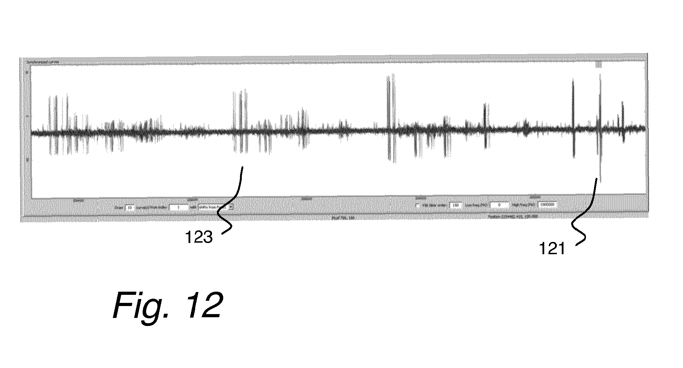

Next, a static alignment is performed for the time series data curves over the entire time index range based on the initial POI, step 955. Figure 12 is a graphical representation of the twenty time series curves of Figure 7 after the application of the initial static alignment of the entire time series curves based on an initial POI 121. It may be noted that the result is a much better alignment of the data peaks. However, it may also be noted that several of the peaks, notably those with indexes further to the left of the graph, do not have over-lapping peaks, e.g., the peaks at 123. This misalignment is due to the fact that the time-indecis of the curves are not uniform.

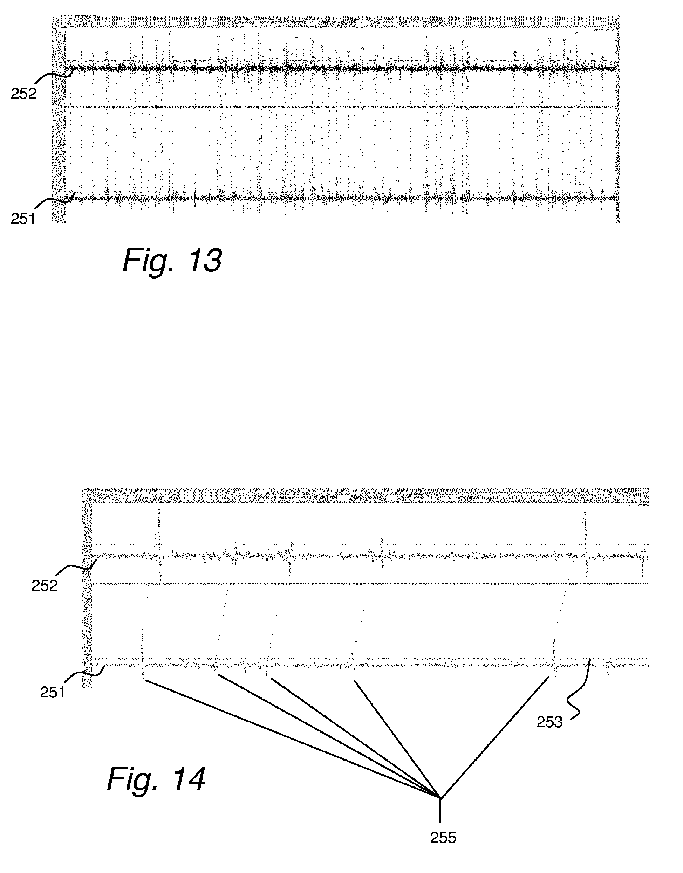

Next, points of interest are determined in the reference time series, step 957. The points of interest may be defined as data points that exceed or fall below a particular threshold. Other algorithms may be used to determine particular points of interest pertinent to the particular statistical analysis that is to be performed on the time series data. Figures 13 and 14 illustrate selected data points as points of interest in a reference time series 251 and in a non-reference time series 252 that is to be aligned to the reference time series 251. Figure 14 is a portion of the graph of Figure 13 at a higher resolution. For example, in Figure 14 each of the dotted peaks exceeds a defined threshold, illustrated as horizontal line 253, and are thus points of interest 255.

For each of the points of interest in the reference time series, a neighborhood is defined, step 959. In one embodiment, the neighborhoods are defined by a user using the development tool 508. In this embodiment, the development tool 508 displays the time series curves, for example, as illustrated in Figures 13 and 14, and provides a mechanism by which a user may indicate the desired neighborhoods around points of interest. The development tool 508 receives such selections by the user.

Alternatively, an algorithm is used to define neighborhoods around the various points of interest. One possible mechanism is to set neighborhood boundaries equidistant between points of interest 255. Another mechanism is to set neighborhood boundaries at fixed distances from points of interest, albeit without allowing multiple points of interest within one neighborhood.

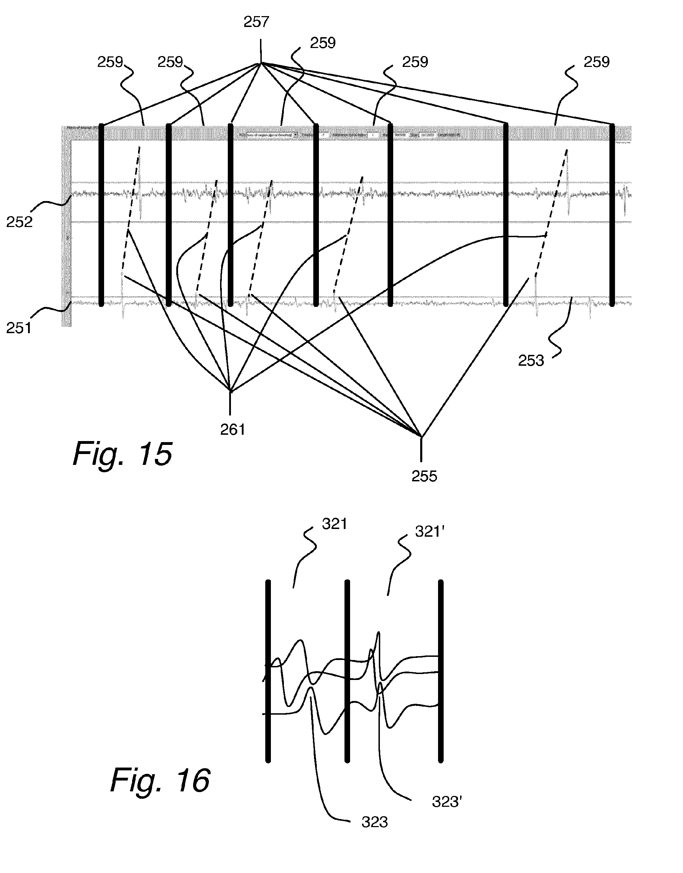

Figure 15 is a graphical illustration of neighborhoods defined around points of interest in the time series data. Lines 257 define neighborhoods 259 around each of the peaks 255.

For each of the neighborhoods, a static alignment is performed aligning the corresponding neighborhood in each of the time series in the time series data 109, step 961. To perform the static alignment of a time series data segment corresponding to a neighborhood, the best location is determined for the candidate point of interest in the time series to be aligned with the reference time series. By "candidate point of interest" it is implied that the actual point of interest in the time series to be aligned with the reference time series is not know a priori. Each point p in the non-reference time series neighborhood segment is attempted for alignment. A maximum likelihood algorithm is used to determine the best fit between the reference time series neighborhood segment and the non-reference time series neighborhood segment by minimizing the distance between the two segments. When the best fit has been determined, the indices in the non-reference time series neighborhood segment are shifted by the distance between the point *p* that is found to have the best alignment potential and the point of interest in the reference time series. The point *p* then becomes the corresponding point of interest in the non-reference time series. Dashed lines 261 illustrate the correspondence between points of interest in the non-reference time series 252 and in the reference time series 251 prior to the alignment operations of the neighborhood segments.

The aligned time series neighborhood segments are then spliced together to form one aligned time series data set, step 963. In such a spliced together time series data set, each of the points of interest in all the time series are aligned with the corresponding points of interest in the other time series and in the reference time series.

The alignment operation of Step 961 may produce gaps in the aligned time series data. These gaps are located in the boundary areas of time series neighborhoods and away from the points of interest. Thus, the data there is of small importance to the statistical analysis of a side-channel attack. One mechanism by which these gaps may be dealt with in the splicing operation is to copy adjacent non-gap data points into any time-series data points with missing data. Interpolation to cover the gaps is another approach.

Consider again the illustration of Figure 8 which is reproduced in Figure 16 with neighborhoods 321 and 321' around points of interest 323 and 323', respectively, defined therein. According to the technology described above, the neighborhoods are statically aligned independently and spliced together to produce the time series curves illustrated in Figure 10.

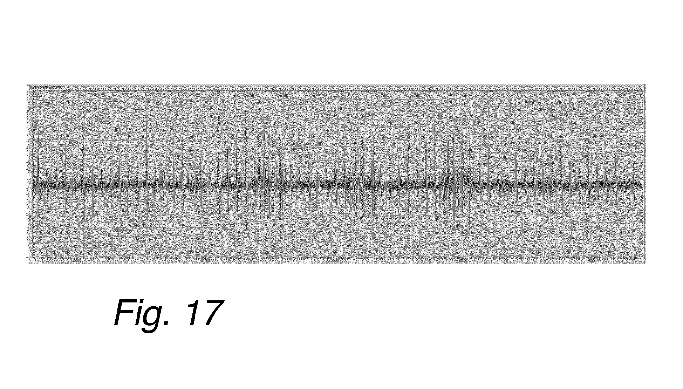

A real-world example of the time series data set of Figure 7 that has been aligned with the multi-static alignment mechanism described herein is illustrated in Figure 17. The clear difference between the graphs of Figure 7 and Figure 17 illustrates the power of the alignment method provided by the multi-static alignment technology described herein.

In an embodiment, a development tool 508 is provided with a data analysis tool 507 that performs the multi-static alignment described hereinabove on external physical property data collected from the secure electronic device 101 via the sensor 107. A manufacturer or developer of secure electronic devices 101 may use the multi-static alignment technology described herein to demonstrate whether the secure electronic device is vulnerable to a side-channel attack which uses the multi-static alignment technology to align time series data that has been deliberately desynchronized in the performance of operations from which sensor data is collected with the goal of capturing secret data stored in the secure electronic device 101.

Although specific embodiments of the invention have been described and illustrated, the invention is not to be limited to the specific forms or arrangements of parts so described and illustrated. The invention is limited only by the claims.

## Claims

1. A method of operating at least one sensor (107) and a computer (105) to analyze a secure electronic device (101) to challenge the security of the secure electronic device (101), the at least one sensor (107) operable to capture physical characteristics of the operation of the secure electronic device (101), and the computer (105), connected to a storage medium (111) for storing time-series data (109) of captured physical characteristics and having a secondary storage (405) storing a data acquisition module (505) and a development tool (508) including a data analysis tool (507), the method comprising:
• using at least one sensor (107) to capture (605) data emitted from the secure electronic device (101);
• operating the computer (105) according to instructions of the data acquisition module (505) to store the data captured from the at least one sensor (107) as a plurality of time series (109) potentially revealing an aspect of a computation performed by the secure electronic device (101) wherein each member of the plurality of time series (109) is a time indexed data series and wherein the members of the plurality of time series data have time indices shifted in time with respect to one another;
• operating the computer (105) according to instructions of the data analysis tool (507) to:
- select (951) a reference time series from the plurality of time series;
- determine (953) a plurality of points of interest (255) in the reference time series wherein each point of interest satisfies a predetermined criteria;
- define (959) an index neighborhood (259) around each point of interest (255) in the reference time series thereby defining a plurality of time series reference data segments;
- for each index neighborhood, for each of the plurality of time series, performe (961) a static time series alignment on a time series segment defined by the index neighborhood with respect to the corresponding time series segment;
- for each aligned time series, splice (963) the aligned time series segments thereby producing a plurality of aligned time series;
- use the aligned time series to perform a side-channel attack analysis (603, 605);
- compare (607) the analysis results against known-to-be-correct values thereby demonstrating whether the secure electronic device reveals through the captured physical property the known-to-be-correct value.

2. The method of operating at least one sensor (107) and a computer (105) to analyze a secure electronic device (101) to challenge the security of the secure electronic device (101) of Claim 1 to challenge the security of a secure electronic device, further comprising:
prior to defining index neighborhoods around points of interest, operating the computer (105) to perform (955) a static alignment operation on the plurality of time series to align each member of the plurality of time series against the reference time series.

3. The method of operating at least one sensor (107) and a computer (105) to analyze a secure electronic device (101) to challenge the security of the secure electronic device (101) of claim 1 or 2, wherein the captured sensor data is power consumption.

4. The method of operating at least one sensor (107) and a computer (105) to analyze a secure electronic device (101) to challenge the security of the secure electronic device (101) of claim 1 or 2, wherein the captured sensor data is electromagnetic radiation emitted from the electronic device.

5. The method of operating at least one sensor (107) and a computer (105) to analyze a secure electronic device (101) to challenge the security of the secure electronic device (101) of claim 1 or 2, wherein the captured sensor data is sound emitted from the electronic device.

6. The method of operating at least one sensor (107) and a computer (105) to analyze a secure electronic device (101) to challenge the security of the secure electronic device (101) of any preceding claim, wherein points of interest are determined by comparing data points against a threshold.

7. The method of operating at least one sensor (107) and a computer (105) to analyze a secure electronic device (101) to challenge the security of the secure electronic device (101) of any preceding claim, wherein index neighborhoods are defined by receiving user input.

8. The method of operating at least one sensor (107) and a computer (105) to analyze a secure electronic device (101) to challenge the security of the secure electronic device (101) of any preceding claim, wherein index neighborhoods are defined relative to identified points of interest.

9. A development system for verifying secure electronic devices (101) as not being vulnerable to a side-channel attack using multi-static alignment, comprising:
• a computer (105) having a processor (401) connected to a sensor (107) for capturing side-channel data emitted by the secure electronic device (101) or to a storage device (111) storing data (109) captured by a sensor for capturing side-channel data emitted by the secure electronic device;
• a storage device (405) connected to the computer and containing instructions causing the processor (401) to perform the method of any of Claims 1 through 8.

10. A secure electronic device (101) verified as not vulnerable to a side-channel attack by verifying the secure electronic device using the method of any of Claims 1 through 8.
